Europäisches Patentamt

European Patent Office

Office européen des brevets

(11) Veröffentlichungsnummer: **0 306 720**
**A2**

## EUROPÄISCHE PATENTANMELDUNG

(21) Anmeldenummer: 88112982.9

(22) Anmeldetag: 10.08.88

(51) Int. Cl.⁴: **F16H 5/04 , G05G 9/12 ,
B60K 20/12**

(30) Priorität: 09.09.87 DE 3730230

(43) Veröffentlichungstag der Anmeldung:
15.03.89 Patentblatt 89/11

(84) Benannte Vertragsstaaten:
FR GB IT SE

(71) Anmelder: GETRAG Getriebe- und
Zahnradfabrik Hermann Hagenmeyer GmbH
& Cie
Solitudeallee 24
D-7140 Ludwigsburg(DE)

(72) Erfinder: Knödel, Gunter
Gaussweg 3
D-7130 Mühlacker(DE)

(74) Vertreter: Witte, Alexander, Dr.-Ing.
Schickhardtstrasse 24
D-7000 Stuttgart 1(DE)

(54) Einrichtung zum Verriegeln von Gängen eines Kraftfahrzeug-Stufengetriebes.

(57) Eine Einrichtung dient zum Verriegeln von Gängen eines Kraftfahrzeug-Stufengetriebes. Das Getriebe weist vier axial verschiebbare Schaltstangen (19 bis 21) auf, die jeweils mit in eine gemeinsame Radialebene bringbaren Nuten (40 bis 43) versehen sind. Eine Verriegelungsplatte (50) ist in der Radialebene angeordnet. Sie weist in Bereichen, die an die Schaltstangen (18 bis 21) angrenzen, Aussparungen auf, die mit jeweils zwei zueinander geneigten Sperrkanten (56/58, 63, 71, 77/78) versehen ist, die in die Nuten (40 bis 43) einführbar sind. Jeweils eine zum Einlegen eines Ganges betätigte erste Schaltstange (18) verschiebt mit ihrer ungenuteten Außenkontur (34) durch Anlage an den ihr zugeordneten Sperrkanten (56/58) die Verriegelungsplatte (50) in der Radialebene (46) derart, daß jeweils eine Sperrkante (63, 71, 78) der an die übrigen drei Schaltstangen (19 bis 21) angrenzenden Aussparungen in die ihr zugehörige Nut (40 bis 43) eingreift.

Um eine möglichst einfache Einrichtung ohne große Toleranzprobleme beim Fertigen der Verriegelungsplatte und der Nuten zu erhalten, verlaufen die Sperrkanten (56/58, 63, 71, 77/78) an allen Aussparungen um denselben Winkel zueinander geneigt. Die erste Schaltstange (18) drückt durch Anlage an einer ersten Sperrkante (56) nur eine zu dieser parallele Sperrkante (63) einer zweiten Schaltstange (19) in die zugehörige Nut (41), während sie durch Anlage an der zweiten Sperrkante (58) nur die zu dieser parallelen Sperrkanten (71, 78) der dritten und vierten Schaltstange (20, 21) in die zugehörigen Nuten (42, 43) drückt. Die Verriegelungsplatte (50) ist nur an den Schaltstangen (18 bis 21) geführt.

Fig 5

## Einrichtung zum Verriegeln von Gängen eines Kraftfahrzeug-Stufengetriebes

Die Erfindung betrifft eine Einrichtung zum Verriegeln von Gängen eines Kraftfahrzeug-Stufengetriebes, mit vier axial verschiebbaren Schaltstangen, die jeweils mit in eine gemeinsame Radialebene bringbaren Nuten versehen sind, mit einer Verriegelungsplatte, die in der Radialebene angeordnet ist und in Bereichen, die an die Schaltstangen angrenzen, Aussparungen aufweist, die mit jeweils zwei zueinander geneigten Sperrkanten versehen sind, die in die Nuten einführbar sind, wobei jeweils eine zum Einlegen eines Ganges betätigte erste Schaltstange mit ihrer ungenuteten Außenkontur durch Anlage an den ihr zugeordneten Sperrkanten die Verriegelungsplatte in der Radialebene derart verschiebt, daß jeweils eine Sperrkante der an die übrigen drei Schaltstangen angrenzenden Aussparungen in die ihr zugehörige Nut eingreift.

Eine derartige Einrichtung ist aus der DE-OS 36 40 416 bekannt.

Bei der bekannten Einrichtung sind die vier Schaltstangen in einem Getriebe parallel so angeordnet, daß ihre Achsen durch Eckpunkte eines gedachten gleichseitigen Trapezes verlaufen und auf diese Weise an den beiden schrägen Seiten des gedachten Trapezes je ein Paar Schaltstangen bilden. In einer gemeinsamen Radialebene sind die zylindrischen Schaltstangen mit jeweils zwei Sperrnuten versehen. Die Sperrnuten weisen die Gestalt eines Kreisabschnittes auf, d.h. sie sind mit einer gerade verlaufenden Grundlinie versehen, die eine Sehne im kreisförmigen Querschnitt der Schaltstange bildet. Die Sperrnuten verlaufen an jeder Schaltstange um einen Winkel zueinander geneigt, wobei dieser Winkel bei den Schaltstangen paarweise gleich ist, deren Achsen auf einander diagonal gegenüberliegenden Ecken des gedachten Trapezes angeordnet sind. Einer der beiden Neigungswinkel ist ein spitzer Winkel und einer ist ein stumpfer Winkel. Die stumpfwinklig zueinander verlaufenden Sperrnuten sind zum Inneren des Trapezes hin gerichtet, während die spitzwinklig verlaufenden Nuten zum Äußeren des Trapezes hin gerichtet sind.

Eine in der Radialebene angeordnete Verriegelungsplatte ist im Bereich der Schaltstangen mit Aussparungen versehen, die Sperrkanten aufweisen. Diese Sperrkanten können in die Sperrnuten der Schaltstangen eingreifen und sind ebenso wie diese gegeneinander in einem stumpfen bzw. einem spitzen Winkel angestellt.

Die Verriegelungsplatte ist etwa im Zentrum des gedachten Trapezes mit einem Langloch versehen, das sich in Richtung einer gedachten Verbindungslinie der beiden Paare von Schaltstangen erstreckt. Durch das Langloch greift ein getriebefester Führungsbolzen, so daß die Führungsplatte um den Führungsbolzen geschwenkt sowie in Richtung des Langloches am Führungsbolzen entlang geführt werden kann.

Wird eine der Schaltstangen axial derart verschoben, daß ihre Sperrnuten außer Eingriff mit der Verriegelungsplatte kommen, liegen die Sperrkanten der Verriegelungsplatte bei dieser axial verschobenen Schaltstange an der ungenuteten zylindrischen Außenkontur an. Die Verriegelungsplatte wird auf diese Weise um den Führungsbolzen gedreht und an ihm entlang derart verschoben, daß die Sperrkanten der zu den drei übrigen Schaltstangen gehörigen Aussparungen dort in die jeweils zugehörigen Nuten eingreifen. Die Anordnung ist dabei so gewählt, daß bei der jeweils unmittelbar benachbarten Schaltstange desselben Paares beide Sperrkanten formschlüssig in beide Sperrnuten der Schaltstange eingreifen, während bei den beiden Schaltstangen des jeweils anderen Paares nur jeweils eine Sperrkante in eine Sperrnut formschlüssig eingreift. Durch die Verdrehung und Verschiebung der Verriegelungsplatte, die Lage und Anordnung der Sperrkanten bzw. Sperrnuten und insbesondere durch die Führung von Führungsbolzen und Langloch wird erreicht, daß die Verriegelungsplatte die drei jeweils nicht axial verschobenen Schaltstangen formschlüssig und kraftschlüssig sperrt, weil infolge der gewählten Geometrie die Führungsplatte insgesamt vier definierte form- und kraftschlüssige Endstellungen aufweist.

Die bekannte Einrichtung hat jedoch den Nachteil, daß zur Herstellung der form- und kraftschlüssigen Endstellungen sämtliche Teile nach Form und Lage sehr präzise gearbeitet werden müssen, insbesondere müssen Führungsbolzen und Langloch sehr exakt ineinander laufen, damit die Verriegelungsplatte sich nicht ungewollt verklemmt.

Dies ist jedoch sowohl in der Herstellung wie auch in der Montage ein erheblicher Nachteil, weil die erforderliche Präzision nur mit entsprechendem wirtschaftlichem Aufwand und Zeitaufwand gewährleistet werden kann.

Der Erfindung liegt daher die Aufgabe zugrunde, eine Einrichtung der eingangs genannten Art dahingehend weiterzubilden, daß bei ebenso zuverlässiger Verriegelung der jeweils nicht betätigten Schaltstangen Teile verwendet werden können, die in der Fertigung und Montage mit üblichen Toleranzen behaftet sein können.

Diese Aufgabe wird erfindungsgemäß dadurch gelöst, daß die Sperrkanten an allen Aussparungen um den selben Winkel zueinander geneigt verlaufen, daß die erste Schaltstange durch Anlage an einer ersten Sperrkante nur eine zu dieser parallele Sperrkante einer zweiten Schaltstange in die zugehörige Nut drückt, während sie durch Anlage an der zweiten Sperrkante nur die zu dieser parallelen Sperrkanten der dritten und vierten Schaltstange in die zugehörige Nuten drückt, und daß die Verriegelungsplatte nur an den Schaltstangen geführt ist.

Die der Erfindung zugrundeliegende Aufgabe wird auf diese Weise vollkommen gelöst, weil durch die vorstehend genannte Kinematik einerseits zuverlässig gewährleistet wird, daß an jeder Schaltstange mindestens eine Sperrkante in die zugehörige Sperrnut greift und ein unbeabsichtigtes Verschieben einer gerade nicht betätigten Schaltstange zuverlässig verhindert wird, andererseits sind aber relativ großzügige Toleranzen ausreichend, um den Verriegelunseffekt zu bewirken, weil dieser im Gegensatz zur eingangs genannten Einrichtung nur axial formschlüssig wirkt, nicht jedoch zugleich kraftschlüssig. Vor allem aber bewirkt die fehlende zusätzliche Führung der Verriegelungsplatte mit einem zentralen Langloch sowie einem Führungsbolzen, wie dies bei der eingangs genannten Einrichtung der Fall war, daß keinerlei Verklemmen der Verriegelungsplatte droht, wenn diese entweder nicht hinreichend präzise gefertigt wurde oder im Langzeitgebrauch irgendwelchen Abnutzungen oder Veränderungen unterliegt.

Bei der erfindungsgemäßen Einrichtung kann daher die Verriegelungsplatte als einfaches Stanzteil mit üblichen Toleranzen hergestellt werden und auch bei der Montage braucht die Verriegelungsplatte lediglich lose eingelegt zu werden, ohne daß es einer Justierung einer gesonderten Führung der Verriegelungsplatte bedarf.

Bei einer bevorzugten Ausgestaltung der Erfindung sind die Sperrkanten in den Aussparungen um jeweils 90° zueinander geneigt angeordnet.

Diese Maßnahme hat den Vorteil, daß die Verriegelungsbewegung lediglich entlang zweier kartesischer Koordinaten erfolgen kann, ohne daß wie beim Stand der Technik eine komplizierte überlagerte Dreh- und Verschiebebewegung erforderlich ist.

Bei einer weiteren bevorzugten Ausgestaltung der Erfindung sind die Aussparungen U-förmig ausgebildet und weisen eine Breite auf, die dem Durchmesser der ungenuteten Außenkontur der zylindrischen Schaltstangen entspricht.

Diese Maßnahme hat den Vorteil, daß eine zusätzliche Seitenbegrenzung und Fixierung der Verriegelungsplatte bewirkt wird, weil die axial verschobene Schaltstange mit ihrer zylindrischen Außenkontur die Verriegelungsplatte an beiden Seiten der U-förmigen Aussparung hält.

Weiterhin ist bevorzugt, wenn die Nuten als Ringnuten an den Schaltstangen ausgebildet sind.

Auch diese Maßnahme hat den Vorteil, die Fertigung der erfindungsgemäßen Einrichtung zu vereinfachen, weil die Schaltstangen lediglich in einfacher Weise, z.B. spanlos, mit einer Ringnut versehen werden müssen, ohne daß, wie bei der eingangs genannten Einrichtung komplizierte formgebende Verfahren unter definierten Winkelstellungen erforderlich sind, die zudem noch für zwei Paare von Schaltstangen eine unterschiedliche Form erfordern.

Es wurde bereits erwähnt, daß die erfindungsgemäße Einrichtung sich besonders für solche Getriebe eignet, bei denen die Schaltstangen als zwei voneinander beabstandete Paare im Getriebe angeordnet sind.

Diese Bauweise hat den an sich bekannten Vorteil, daß 6-Gang-Getriebe in besonders platzsparender Bauweise konzipiert werden können.

Bevorzugt bilden in diesem Falle die erste und die zweite Schaltstange sowie die dritte und die vierte Schaltstange jeweils ein Paar.

Eine besonders gute Wirkung wird dabei dann erzielt, wenn die zur ersten Sperrkante parallelen Sperrkanten innerhalb der Paare von Aussparungen näherungsweise ein Abstand voneinander aufweisen, der dem Abstand der in einer Richtung senkrecht zur ersten Sperrkante einander zu weisenden ungenuteten Außenkonturen der Schaltstangen zuzüglich der Tiefe einer Nut entspricht, während die zur zweiten Sperrkante parallelen Sperrkanten innerhalb der Paare von Aussparungen näherungsweise einen Abstand voneinander aufweisen, der dem Abstand der in einer Richtung senkrecht zur zweiten Sperrkante weisenden Außenkonturen der Schaltstangen entspricht, und daß der Abstand der zur zweiten Sperrkante parallelen Sperrkanten zwischen den Paaren von Aussparungen näherungsweise dem Abstand der ungenuteten Außenkonturen der Schaltstangen in einer Richtung senkrecht zur zweiten Sperrkante entspricht.

Diese Maßnahmen haben den Vorteil, daß die angestrebte Lösung in besonders einfacher Weise erreicht wird, weil die genannte Dimensionierung eine formschlüssige, jedoch nicht kraftschlüssige Verriegelung der drei jeweils nicht betätigten Schaltstangen garantiert, so daß infolge des fehlenden Kraftschlusses geringe Fertigungstoleranzen unschädlich sind, weil die Verriegelungsplatte in jeder Verriegelungsstellung noch ein gewisses Restspiel aufweist. Auch ist die beschriebene Geometrie prinzipiell unabhängig davon, ob die Achsen der vier Schaltstangen auf den Eckpunkten eines Rechtecks, eines symmetrischen Trapezes oder eines unsymmetrischen Trapezes liegen, weil die genannte Geometrie es völlig freistellt, welche Gestalt das gedachte Viereck hat, auf dessen Eckpunkten die Achse der Schaltstangen liegen.

Weitere Vorteile ergeben sich aus der Beschreibung und der beigefügten Zeichnung.

Es versteht sich, daß die vorstehend genannten und die nachstehend noch erläuterten Merkmale nicht nur in der jeweils angegebenen Kombination sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine Vorderansicht von zwei Führungsteilen für je zwei Schaltstangen eines 6-Gang-Stufengetriebes eines Kraftfahrzeuges;

Fig. 2 eine Seitenansicht eines dieser Führungsteile, teilweise aufgebrochen;

Fig. 3 in der Ansicht der Fig. 1 eine Verriegelungsplatte, wie sie bei den Führungsteilen der Fig. 1 Verwendung finden kann;

Fig. 4 eine vergrößerte Detailansicht eines Verriegelungsabschnittes der Verriegelungsplatte mit einer gesperrten und einer nicht-gesperrten Schaltstange;

Fig. 5 bis 8 vier Arbeitsstellungen der Verriegelungsplatte mit jeweils einer nicht-gesperrten und drei gesperrten Schaltstangen.

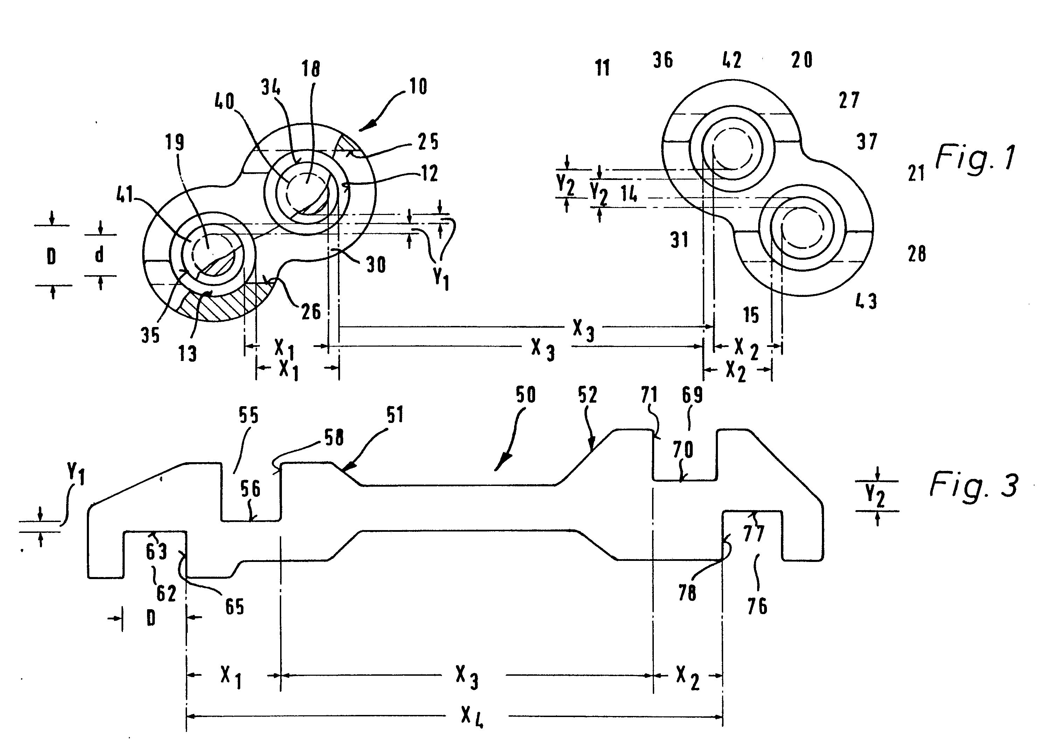

In Fig. 1 bezeichnet 10 ein linkes doppelbuchsenartiges Führungsteil und 11 ein rechtes, ebenfalls doppelbuchsenartiges Führungsteil. Beide Führungsteile 10, 11 sind mit jeweils zwei Längsbohrungen 12/13 bzw. 14/15 versehen. In den Bohrungen 12 bis 15 verlaufen Schaltstangen 18, 19, 20, 21. Eine erste Schaltstange 18 links oben in Fig. 1 dient beispielsweise zum Einlegen des Rückwärtsganges, eine zweite Schaltstange 19 links unten in Fig. 1 dient beispielsweise zum Schalten des ersten und des zweiten Ganges, eine dritte Schaltstange 20 rechts oben in Fig. 1 dient zum Einlegen eines fünften und eines sechsten Ganges, während eine vierte Schaltstange 21 rechts unten in Fig. 1 zum Einlegen eines dritten und vierten Ganges dient.

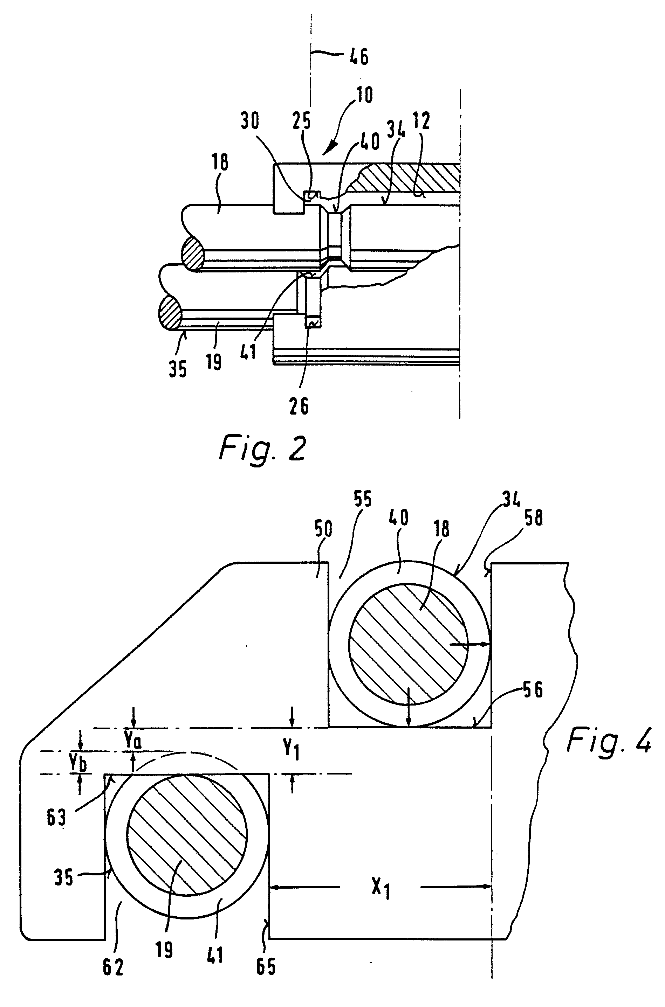

Die Führungsteile 10, 11 sind in der Zeichenebene der Fig. 1 mit einer Führung versehen, die nach oben und unten durch Grenzflächen 25, 26, 27, 28 begrenzt wird und insgesamt einen ersten Schlitz 30 im linken Führungsteil 10 sowie einen zweiten Schlitz 31 im rechten Führungsteil 11 bildet, wie dies auch aus der Seitenansicht der Fig. 2 deutlich wird.

Die Schaltstangen 18 bis 21 weisen kreiszylindrische Außenkonturen 34 bis 37 auf, die an vorbestimmten axialen Positionen mit Ringnuten 40 bis 43 versehen sind. Die Ringnuten 40 bis 43 weisen einen flachen Nutengrund und konische Begrenzungswände zu den Außenkonturen 34 bis 37 auf.

Wie man deutlich aus Fig. 2 erkennt, sind die Ringnuten 40 bis 43 in eine Flucht mit den Schlitzen 30, 31 bringbar und bilden dort insgesamt eine Radialebene 46.

Fig. 3 zeigt eine Verriegelungsplatte 50 mit einem linken Verriegelungsabschnitt 51 und einem rechten Verriegelungsabschnitt 52. Der linke Verriegelungsabschnitt 51 ist an seiner Oberseite mit einer ersten Aussparung 55 versehen, die U-förmig gestaltet ist und eine untere radiale Sperrkante 56 sowie eine rechte axiale Sperrkante 58 aufweist.

Eine entsprechende zweite Aussparung 62 ist links unterhalb der ersten Aussparung 55 am linken Verriegelungsabschnitt 51 zu erkennen und auch diese weist eine radiale Sperrkante 63 sowie eine axiale Sperrkante 65 auf.

Entsprechendes gilt für den rechten Verriegelungsabschnitt 52 mit einer oberen Aussparung 69 und dortigen Sperrkanten 70, 71 sowie einer unteren Aussparung 76 mit Sperrkanten 77, 78.

Die Verriegelungsplatte 50 ist in der Radialebene 46 in die Schlitze 30, 31 der Führungsteile 10, 11 einschiebbar, wobei die Aussparungen 55, 62, 69 und 76 die Schaltstangen 18 bis 21 umfassen, wie dies nachstehend erläutert werden wird.

Bei der Betätigung des Getriebes soll gewährleistet sein, daß jeweils nur eine einzige der vier Schaltstangen 18 bis 21 axial zum Einlegen eines bestimmten Ganges verschoben wird, während die übrigen drei Schaltstangen zur Vermeidung von Fehlschaltungen axial verriegelt werden sollen. Wenn z.B. die erste Schaltstange 18 zum Einlegen des Rückwärtsganges gezogen wird, sollen die übrigen drei Schaltstangen 19, 20, 21 in einer definierten Neutralstellung verharren, so daß die sechs Vorwärtsgänge des Getriebes nicht unbeabsichtigt ebenfalls ganz oder teilweise eingelegt werden.

Bei der erfindungsgemäßen Einrichtung soll dies dadurch erreicht werden, daß jeweils eine der Schaltstangen 18 bis 21 in der zugehörigen Aussparung 55, 62, 69, 76 der Verriegelungsplatte 50 axial verschiebbar ist, während bei den übrigen drei Schaltstangen eine oder mehrere der zugehörigen Sperrkanten in die Ringnut 40 bis 43 der zu sperrenden Schaltstangen greift.

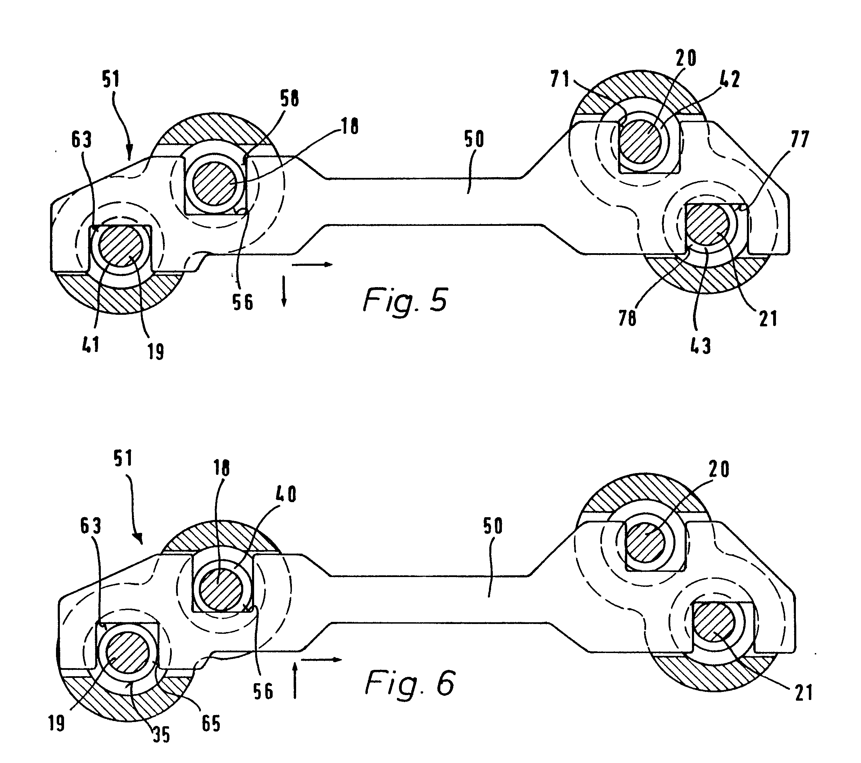

Fig. 4 zeigt im vergrößerten Ausschnitt und Fig. 5 zeigt in Gesamtansicht den Fall, bei dem die erste Schaltstange 18 betätigt wird.

Wie man aus den Fig. 1, 3 und 4 erkennen kann, sind die Aussparungen 55, 62, 69, 76 ebenso breit wie der Durchmesser der Außenkonturen 34 bis 37 der Schaltstangen 18 bis 21. Die gezogene Schaltstange 18 füllt daher die erste Aussparung 55 durch Anlage an den zwei Sperrkanten 56 und 58 aus. Im vorliegenden Falle interessant ist dabei zunächst die Anlage der Außenkontur 34 der ersten Schaltstange 18 an der unteren radialen Sperrkante 56 sowie der rechten axialen Sperrkante 58. Die Führungsplatte 50 wird nämlich durch die gezogene Schaltstange 18 infolge der vorstehend genannten Anlagen nach rechts und nach unten verschoben.

Die rechten axialen Sperrkanten 58 und 65 der ersten Aussparung 55 und der zweiten Aussparung 62 sind um einen Abstand $X_1$ gegeneinander versetzt, der dem Abstand der Außenkonturen 34, 35 in einer Richtung senkrecht zu den axialen Sperrkanten 58, 65 entspricht. Aufgrunddessen fluchten die axialen Sperrkanten 64 und 65 der zweiten Aussparung 62 ebenfalls mit der ungenuteten Außenkontur 35 der zweiten Schaltstange 19.

Der vertikale Abstand $y_1$ der radialen Sperrkanten 56 und 63 der ersten Aussparung 55 bzw. zweiten Aussparung 62 voneinander entspricht dem Abstand $y_a$ der Außenkonturen 34 und 35 der ersten Schaltstange 18 bzw. der zweiten Schaltstange 19 voneinander in einer Richtung senkrecht zu den radialen Sperrkanten 56, 63, zuzüglich der Tiefe $y_b$ einer der Nuten 40 bzw. 41.

Auf diese Weise wird bei gezogener Schaltstange 18 die radiale Sperrkante 63 von oben in die Ringnut 41 der zweiten Schaltstange 19 gedrückt.

Wie aus den Fig. 1 und 3 deutlich wird, haben die rechte axiale Sperrkante 58 der ersten Aussparung 51 und die linke axiale Sperrkante 71 der dritten Aussparung 69 einen Abstand $X_3$ voneinander, der dem Abstand der Außenkonturen 34 und 36 der ersten Schaltstange 18 bzw. der dritten Schaltstange 20 voneinander in einer Richtung senkrecht zu den axialen Sperrkanten 58, 71 zuzüglich der Tiefe einer der Nuten 40, 42 entspricht.

Auf diese Weise wird beim Ziehen der ersten Schaltstange 18 (Fig. 4 und 5) erreicht, daß die linke axiale Sperrkante 71 in die Ringnut 42 der dritten Schaltstange 20 greift und ebenso die linke axiale Sperrkante 78 in die Ringnut 43 der vierten Schaltstange 21.

Wie man aus der rechten Hälfte von Fig. 5 erkennen kann, liegt die obere radiale Sperrkante 77 ebenfalls in der Ringnut 43 der vierten Schaltstange 21. Dies geschieht jedoch im wesentlichen aus Gründen des Eigengewichts der Verriegelungsplatte 50, weil die Aussparungen 55, 62, 69 und 76 mit einer solchen Toleranz in die Verriegelungsplatte 50 eingearbeitet sind, daß die Verriegelungsplatte 50 auch in einer Verriegelungsstellung (z.B. derjenigen der Fig. 5) noch so viel Spiel aufweist, daß sie in geringem Umfange verschoben werden kann. Bei der Verriegelungsstellung der Fig. 5 mit gezogener erster Schaltstange 18 könnte der rechte Verriegelungsabschnitt 52 durchaus in der Höhe etwas bewegt werden, allerdings nur so wenig, daß die linken axialen Sperrkanten 71, 78 nicht außer Eingriff mit den Ringnuten 42, 43 geraten.

Fig. 6 zeigt den Schaltfall, bei dem die zweite Schaltstange 19 gezogen ist. Ihre Außenkontur 35 drückt in diesem Fall nach oben gegen die obere radiale Sperrkante 63 und nach rechts gegen die rechte axiale Sperrkante 65. Demzufolge sperrt die Verriegelungsplatte 50 mit der unteren radialen Sperrkante 56 in der Ringnut 40 die erste Schaltstange 18, während der Verriegelungseffekt an der dritten und vierten Schaltstange 20, 21 demjenigen der Fig. 5 entspricht. Auch hierin zeigt sich, daß die Verriegelungsplatte 50 in den Verriegelungsstellungen mit einem gewissen Spiel bewegt werden kann.

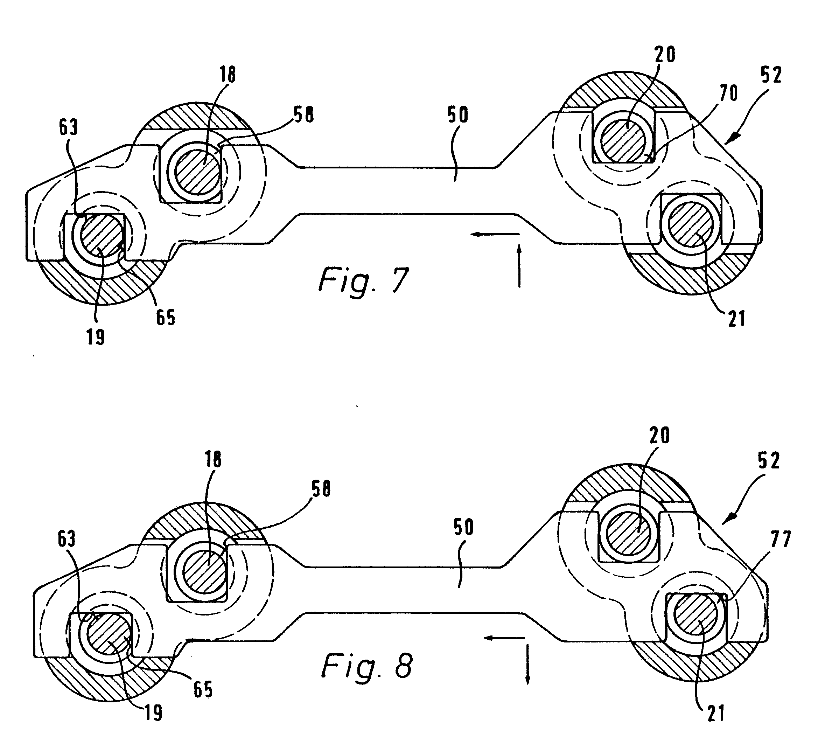

Fig. 7 zeigt den Schaltfall, bei dem die vierte Schaltstange 21 gezogen ist, so daß der rechte Verriegelungsabschnitt 52 nach oben und nach links verschoben wird. Infolgedessen wird die dritte Schaltstange 20 mittels der unteren radialen Sperrkante 70 verriegelt, während die erste Schaltstange 18 durch die rechte axiale Sperrkante 58 verriegelt wird und die zweite Schaltstange 19 durch die rechte axiale Sperrkante 65 und, wiederum infolge des Eigengewichtes der Verriegelungsplatte 50, mittels der oberen radialen Sperrkante 63.

Entsprechendes gilt, wenn gemäß Fig. 8 die dritte Schaltstange 20 gezogen ist, weil dann die obere radiale Sperrkante 77 die vierte Schaltstange 21 sperrt, während die erste Schaltstange 18 und die zweite Schaltstange 19 derselben Sperrung unterliegen, wie dies zuvor zu Fig. 7 erläutert wurde.

**Ansprüche**

1. Einrichtung zum Verriegeln von Gängen eines Kraftfahrzeug-Stufengetriebes, mit vier axial verschiebbaren Schaltstangen (18, 19, 20, 21), die jeweils mit in eine gemeinsame Radialebene (46) bringbaren Nuten (40, 41, 42, 43) versehen sind, mit einer Verriegelungsplatte (50), die in der Radialebene (46) angeordnet ist und in Bereichen, die an die Schaltstangen (18, 19, 20, 21) angrenzen, Aussparungen (55, 62, 69, 76) aufweist, die mit jeweils zwei zueinander geneigten Sperrkanten (56/58, 63/65, 70/71, 77/78) versehen sind, die in die Nuten (40, 41, 42, 43) einführbar sind, wobei jeweils eine zum Einlegen eines Ganges betätigte erste Schaltstange (18) mit ihrer ungenuteten Außenkontur (34) durch Anlage an den ihr zugeordneten Sperrkanten (56/58) die Verriegelungsplatte (50) in der Radialebene (46) derart verschiebt, daß jeweils eine Sperrkante (63, 71, 78) der an die übrigen drei Schaltstangen (19, 20, 21) angrenzenden Aussparungen (62, 69, 76) in die ihr zugehörigen Nut (40, 41, 42, 43) eingreift, dadurch gekennzeichnet, daß die Sperrkanten (56/58, 63/65, 70/71, 77/78) an allen Aussparungen (55, 62, 69, 76) um den selben Winkel zueinander geneigt verlaufen, daß die erste Schaltstange (18) durch Anlage an einer ersten Sperrkante (56) nur eine zu dieser parallele Sperrkante (63) einer zweiten Schaltstange (19) in die zugehörige Nut (41) drückt, während sie durch Anlage an der zweiten Sperrkante (58) nur die zu dieser parallelen Sperrkanten (71, 78) der dritten und vierten Schaltstange (20, 21) in die zugehörigen Nuten (42, 43) drückt, und daß die Verriegelungsplatte (50) nur an den Schaltstangen (18, 19, 20, 21) geführt ist.

2. Einrichtung nach Anspruch 1, dadurch gekennzeichnet, daß die Sperrkanten (56/58, 63/65, 70/71, 77/78) in den Aussparungen (55, 62, 69, 76) um jeweils 90° zueinander geneigt angeordnet sind.

3. Einrichtung nach einem der Ansprüche 1 oder 2, dadurch gekennzeichnet, daß die Aussparungen (55, 62, 69, 76) U-förmig ausgebildet sind und eine Breite (D) aufweisen, die dem Durchmesser (D) der ungenuteten Außenkontur (34, 35, 36, 37) der zylindrischen Schaltstangen (18, 19, 20, 21) entspricht.

4. Einrichtung nach einem der Ansprüche 1 bis 3, dadurch gekennzeichnet, daß die Nuten (40, 41, 42, 43) als Ringnuten an den Schaltstangen (18, 19, 20, 21) ausgebildet sind.

5. Einrichtung nach einem der Ansprüche 1 bis 4, dadurch gekennzeichnet, daß die Schaltstangen (18, 19, 20, 21) als zwei voneinander beabstandete Paare (18/19, 20/21) im Getriebe angeordnet sind.

6. Einrichtung nach Anspruch 5, dadurch gekennzeichnet, daß die erste und die zweite Schaltstange (18, 19) sowie die dritte und die vierte Schaltstange (20, 21) jeweils ein Paar bilden.

7. Einrichtung nach Anspruch 5 oder 6, dadurch gekennzeichnet, daß die zur ersten Sperrkante (56) parallelen Sperrkanten (56/63, 70/77) innerhalb der Paare von Aussparungen (55/62, 69/76) näherungsweise einen Abstand $(y_1, y_2)$ voneinander aufweisen, der dem Abstand $(y_a)$ der in einer Richtung senkrecht zur ersten Sperrkante (56) einander zu weisenden ungenuteten Außenkonturen (34/35, 36/37) der Schaltstangen (18/19, 20/21) zuzüglich der Tiefe $(y_b)$ einer Nut (40, 41, 42, 43) entspricht, während die zur zweiten Sperrkante (58) parallelen Sperrkanten (58/65, 71/78) innerhalb der Paare von Aussparungen (55/62, 69/76) näherungsweise einen Abstand $(x_1, x_2)$ voneinander aufweisen, der dem Abstand $(x_1, x_2)$ der in einer Richtung senkrecht zur zweiten Sperrkante (58) weisenden Außenkonturen (34/35, 36/37) der Schaltstangen (18/19, 20/21) entspricht, und daß der Abstand $(x_3, x_4)$ der zur zweiten Sperrkante (58) parallelen Sperrkanten (58/71, 65/78) zwischen den Paaren von Aussparungen (55/69, 62/76) näherungsweise dem Abstand der ungenuteten Außenkonturen (34/36, 35/37) der Schaltstangen (18/20, 19/21) in einer Richtung senkrecht zur zweiten Sperrkante (58) entspricht.

Fig. 1

Fig. 3

Fig. 2

Fig. 4

Fig. 5

Fig. 6

Fig. 7

Fig. 8